# EUROPEAN PATENT SPECIFICATION

(11) **EP 3 378 593 B1**
(45) Date of publication and mention of the grant of the patent: **19.02.2020**
(21) Application number: 18161709.3
(22) Date of filing: 14.03.2018
(51) Int. Cl.: B23K 26/22, B23K 26/32, H01T 13/20, H01T 13/32, H01T 13/34, B23K 26/323, B23K 26/242, B23K 101/00, B23K 101/36

(54) **METHOD OF MANUFACTURING SPARK PLUG WITH FIRST AND SECOND LASER WELDING STEPS**
VERFAHREN ZUR HERSTELLUNG EINER ZÜNDKERZE MIT ERSTEN UND ZWEITEN LASERSCHWEISSSCHRITTEN
PROCÉDÉ DE FABRICATION D'UNE BOUGIE D'ALLUMAGE AVEC PREMIERE ET DEUXIEME ETAPES DE SOUDAGE LASER

(30) Priority: 15.03.2017 JP 2017050023
(43) Date of publication of application: 26.09.2018
(73) Proprietor: NGK Spark Plug Co., Ltd., Nagoya-shi, Aichi 467-8525 (JP)
(72) Inventor: Inoue, Masahiro, Nagoya-shi, Aichi 467-8525 (JP)
(74) Representative: Laufhütte, Dieter

(56) References cited:
- US-A1- 2011 095 071
- US-A1- 2013 200 773
- US-A1- 2014 042 892
- US-A1- 2017 033 540

## Description

### FIELD OF THE INVENTION

The present invention relates to a method of manufacturing a spark plug according to the preamble of claim 1 (see for example US 2013/200773 A1), which is used for ignition of a fuel gas in an internal combustion engine or the like.

### BACKGROUND OF THE INVENTION

There is conventionally known a spark plug in which an electrode has a spark discharge portion equipped with a noble metal tip of high spark wear resistance. For example, Japanese Laid-Open Patent Publication No. 2012-74271 discloses a method of joining a noble metal tip to an electrode body by laser welding substantially the entire mating surfaces of the noble metal tip and the electrode body to each other.

### SUMMARY OF THE INVENTION

However, the above-disclosed joining method has the problem that inclination of the noble metal tip may occur during welding of the noble metal tip to the electrode body.

It is an object of the present invention to provide a technique for welding a noble metal tip to an electrode body so as not to cause inclination of the noble metal tip.

The present invention can be embodied as the following application examples.

### [Application Example 1]

A method of manufacturing a spark plug according to the present invention is defined in claim 1, the method comprising the following steps :
a fixing step of fixing the noble metal tip to the electrode body, with a first surface of the noble metal tip being held in contact with a second surface of the electrode body to define a joint interface of the first and second surfaces;
a first welding step of welding a first zone of the joint interface by continuously irradiating with a laser beam while moving an irradiation position of the laser beam along the joint interface, the first zone excluding at least a part of a region of the noble metal tip fixed by the fixing step; and
after the first welding step, a second welding step of welding a second zone of the joint interface by continuously irradiating with a laser beam while moving an irradiation position of the laser beam along the joint interface, the second zone being at least partially displaced in position from the first zone and including an unwelded portion of the joint interface left without being welded by the first welding step.

In this method, the noble metal tip is welded to the electrode body by two separate first and second separate welding steps so that the entire fixed region is avoided from simultaneously becoming a molten state. It is therefore possible to suppress inclination of the noble metal tip during welding of the noble metal tip and the electrode body.

### [Application Example 2]

The manufacturing method according to Application Example 1,
wherein a moving direction of the irradiation position during the first welding step is the same as a moving direction of the irradiation position during the second welding step; and
wherein, during a given period between the first welding step and the second welding step, a moving speed of the irradiation position is decreased to a lower level than during the first and second welding steps.

In this method, it is possible to easily ensure the time for solidification of the weld joint in the first zone before the second welding step and thereby effectively suppress inclination of the noble metal tip during welding of the noble metal tip and the electrode body.

### [Application Example 3]

The manufacturing method according to Application Example 2,
wherein the moving- speed of the irradiation position is set to zero during the given period between the first welding step and the second welding step.

In this method, it is possible to ensure the sufficient time for solidification of the weld joint in the first zone before the second welding step and thereby more effectively suppress inclination of the noble metal tip during welding of the noble metal tip and the electrode body.

### [Application Example 4]

The manufacturing method according to Application Example 2 or 3,
wherein an output of the laser beam is decreased to a lower level during the given period between the first welding step and the second welding step than during the first and second welding steps.

In this method, it is possible to enhance solidification of the weld joint in the first zone before the second welding step and thereby effectively suppress inclination of the noble metal tip during welding of the noble metal tip and the electrode body.

### [Application Example 5]

The manufacturing method according to Application Example 1,
wherein a moving direction of the irradiation position during the first welding step is the same as a moving direction of the irradiation position during the second welding step; and
wherein the manufacturing method comprises refraining from welding the joint interface for a given period between the first welding step and the second welding step.

In this method, it is possible to ensure the time for further solidification of the weld joint in the first zone before the second welding step and thereby effectively suppress inclination of the noble metal tip during welding of the noble metal tip and the electrode body.

### [Application Example 6]

The manufacturing method according to Application Example 1,
wherein a moving direction of the irradiation position during the first welding step is different from a moving direction of the irradiation position during the second welding step.

In this method, it is possible to suppress variation between the shapes of the weld joints in the first and second zones.

It should be noted that the present invention can be embodied in various forms such as not only a method for welding a noble metal tip to an electrode of a spark plug but also a method for manufacturing a spark plug.

The other objects and features of the present invention will also become understood from the following description.

### BRIEF DESCRIPTION OF DRAWINGS

FIG 1 is a cross-sectional view of a spark plug according to one exemplary embodiment of the present invention.
FIGS. 2A and 2B are a cross-sectional view and a plan view of a free end portion of the ground electrode, at which a ground electrode tip is welded to an electrode body, according to the exemplary embodiment of the present invention.
FIG. 3 is a flowchart of a process for producing the ground electrode according to the exemplary embodiment of the present invention.
FIGS. 4A to 4C are schematic views of the process for producing the ground electrode according to the exemplary embodiment of the present invention.
FIGS. 5A and 5B are explanatory views of a first welding step during the production of the ground electrode according to the exemplary embodiment of the present invention.
FIGS. 6A and 6B are explanatory views of a second welding step during production of the ground electrode according to the exemplary embodiment of the present invention.
FIGS. 7A and 7B are schematic views showing modification examples of the exemplary embodiment of the present invention.
FIGS. 8A to 8C are schematic views showing modification examples of the exemplary embodiment of the present invention.
FIG. 9 is a schematic view showing a modification example of the exemplary embodiment of the present invention.

### DESCRIPTION OF EMBODIMENTS

### A. Exemplary Embodiment

### A-1. Structure of Spark Plug

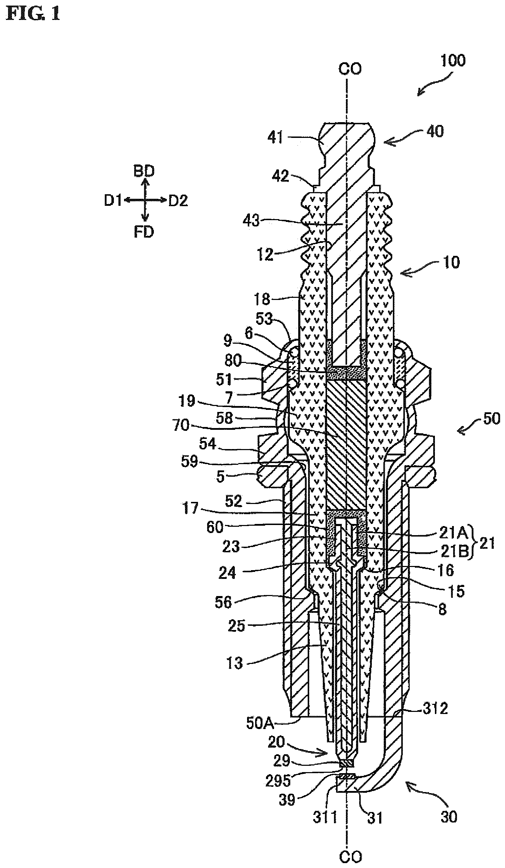

FIG. 1 is a cross-sectional view of a spark plug 100 according to one exemplary embodiment of the present invention. In FIG. 1, a center axis CO of the spark plug 100 (hereinafter also simply referred to as "axis CO") is indicated by a one-dot broken line. In the following description, a direction parallel to the axis CO is also referred to as "axial direction"; a direction of the radius of a circle about the axis CO is also referred to as "radial direction"; and a direction of the circumference of a circle about the axis CO is also referred to as "circumferential direction". The lower and upper sides in FIG 1 are respectively referred to as front and rear sides of the spark plug 100. Further, a direction toward the front side (upper side in FIG. 1) along the axis CO is also referred to as "frontward direction FD"; and a direction toward the rear side (lower side in FIG. 1) along the axis CO is also referred to as "rearward direction BD".

The spark plug 100 is equipped with an insulator 10, a center electrode 20, a ground electrode 30, a metal terminal 40 and a metal shell 50 and is used by mounting on an internal combustion engine to generate a spark discharge in a spark gap between the center electrode 20 and the ground electrode 30 and thereby ignite a fuel gas in a combustion chamber of the internal combustion engine.

The insulator 10 is made of e.g. sintered alumina in a substantially cylindrical shape, with an axial through hole 12 formed therethrough in the axial direction. The insulator 10 includes a collar portion 19, a rear body portion 18, a front body portion 17, a leg portion 13 and step portions 15 and 16. The rear body portion 18 is located rearward of the collar portion 19 and has an outer diameter smaller than that of the collar portion 19. The front body portion 17 is located frontward of the collar portion 19 and has an outer diameter smaller than that of the collar portion 19. The leg portion 13 is located frontward of the front body portion 17 and has an outer diameter smaller than that of the front body portion 17. In a state that the spark plug 100 is mounted to an internal combustion engine (not shown), the leg portion 13 is exposed to the inside of the engine combustion chamber. The step portion 15 is provided on an outer circumference of the insulator 10 at a position between the leg portion 13 and the front body portion 17. The step portion 16 is provided on an inner circumferential side of the front body portion 17.

The metal shell 50 is made of a conductive metal material (such as low carbon steel) in a cylindrical shape and is adapted for fixing the spark plug 100 to an engine head (not shown) of the internal combustion engine. A through hole 59 is formed through the metal shell 50 along the axis CO. The metal shell 50 is disposed around an outer circumference of the insulator 10. In other words, the insulator 10 is inserted and held in the through hole 59 of the metal shell 50 with a front end of the insulator 10 protruding toward the front from a front end of the metal shell 50 and a rear end of the insulator 10 protruding toward the rear from a rear end of the metal shell 50.

The metal shell 50 includes a hexagonal column-shaped tool engagement portion 51 for engagement with a spark plug wrench, a mounting thread portion 51 for mounting to the internal combustion engine, a step portion 56 provided in an inner circumference of the mounting thread portion 51 and a collar-shaped seat portion 54 provided between the tool engagement portion 51 and the mounting thread portion 52. A nominal diameter of the mounting thread portion 52 is set to M8 (8 mm), M10 (10 mm), M12 (12 mm), M14 (14 mm) or M18 (18 mm).

An annular gasket 5, which is formed by bending a metal plate, is fitted on a portion of the metal shell 50 between the mounting thread portion 52 and the seat portion 54. When the spark plug 100 is mounted to the internal combustion engine, the gasket 5 is held between the seat portion 54 and the engine head to seal a clearance between the spark plug 100 and the internal combustion engine.

The metal shell 50 further includes a thin crimp portion 53 located rearward of the tool engagement portion 51 and a thin compression deformation portion 58 located between the seat portion 54 and the tool engagement portion 51.

Annular ring members 6 and 7 are disposed in an annular space between an inner circumferential surface of a part of the metal shell 50 from the tool engagement portion 51 to the crimp portion 51 and an outer circumferential surface of the rear body portion 18 of the insulator 10. A powder of talc 9 is filled in the annular space between the ring members 6 and 7. A rear end of the crimp portion 53 is crimped radially inwardly and fixed to the outer circumferential surface of the insulator 10. The compression deformation portion 58 is compression deformed as the crimp portion 53 is fixed to the inner circumferential surface of the insulator 10 and pushed toward the front during manufacturing of the spark plug 100. With such compression deformation, the insulator 10 is pushed toward the front via the ring members 6 and 7 and the talc 9 within the metal shell 50. As a result, the step portion 15 of the insulator 10 (as an insulator-side step portion) is pressed against the step portion 56 of the metal shell 50 (as a shell-side step portion) via an annular metal plate packing 8 so as to prevent gas leakage from the engine combustion chamber through between the metal shell 50 and the insulator 10.

The center electrode 20 is provided with a center electrode body 21 and a center electrode tip 29.

The center electrode body 21 is rod-shaped and held in a front side of the axial hole 12 of the insulator 10 along the axial direction. In the present embodiment, the center electrode body 21 has a two-layer structure consisting of an electrode base material 21 and a core 21B embedded in the electrode base material 21. The electrode base material 21A can be of nickel or nickel-based alloy (e.g. NCF600 or NCF601). The core 21B can be of copper or copper-based alloy having a higher thermal conductivity than that of the electrode base material 21A. In the present embodiment, the core 21B is formed of copper.

The center electrode body 21 includes a collar portion 24 (also called "flange portion") located at a predetermined position in the axial direction, a head portion 23 located rearward of the collar portion 24 and a leg portion 25 located frontward of the collar portion 24. The collar portion 24 is supported on the step portion 16 of the insulator 10 so that the center electrode 20 is retained in the axial hole 12 of the insulator 10 with a front end of the leg portion 25 (that is, a front end of the center electrode body 21) protruding toward the front from the front end of the insulator 10.

The center electrode tip 29 is substantially cylindrical column-shaped and joined by laser welding to the front end of the center electrode body 21 (leg portion 25). A front end surface of the center electrode tip 29 serves as a first discharge surface 295 that defines the spark gap with the after-mentioned ground electrode tip 39. The center electrode tip 29 is formed as a noble metal tip of high-melting noble metal material such as noble metal (e.g. iridium (Ir)) or noble metal-based alloy.

The ground electrode 30 is provided with a ground electrode body 31 and a ground electrode tip 39.

The ground electrode body 31 is formed into a bent rod shape, rectangular in section, with two end surfaces: a free end face 311 and a joint end face 312. The ground electrode body 31 is joined at the joint end face 32 thereof by e.g. resistance welding to a front end face 50A of the metal shell 50 so that the metal shell 50 and the ground electrode body 31 are electrically connected to each other. The ground electrode body 31 is made of e.g. nickel or nickel-based alloy (e.g. NCF600 or NCF601). Alternatively, the ground electrode body 31 may have a two-layer structure consisting of a high-corrosion-resistant base material (e.g. nickel alloy) and a high-thermal-conductive metal core (e.g. copper) embedded in the base material.

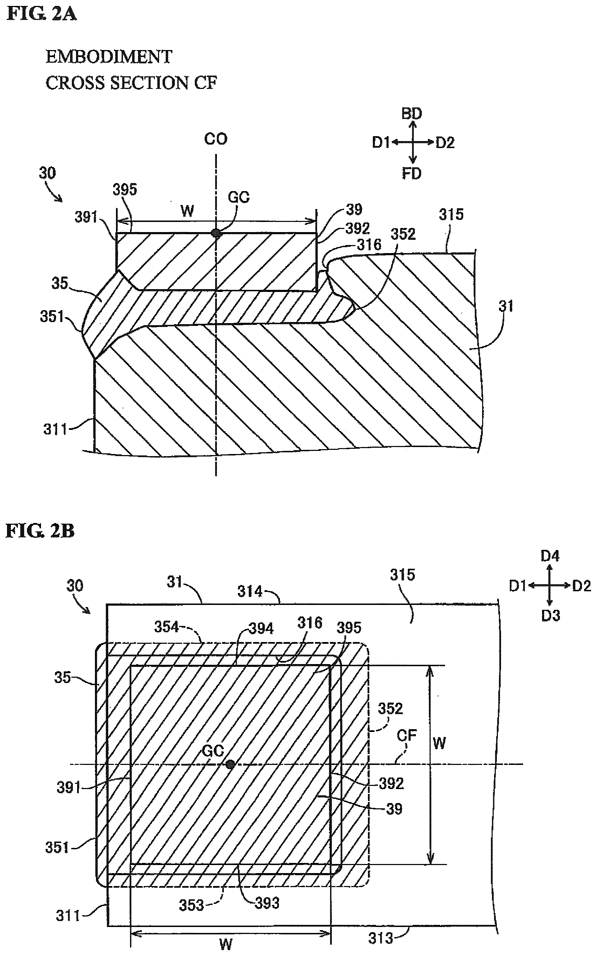

The ground electrode tip 39 is formed as a noble metal tip of high-melting noble metal material such as noble metal (e.g. iridium (Ir)) or noble metal-based alloy as in the case of the center electrode tip 29. As will be explained later, the ground electrode tip 39 is joined to the ground electrode body 31 at a free end portion of the ground electrode 30. A rear end surface of the ground electrode tip 39 serves as a second distance surface 395 (see FIG. 2) that faces the first discharge surface 295 of the center electrode tip 29.

The metal terminal 40 is rod-shaped and held in a rear side of the axial hole 12 of the insulator 10 along the axial direction. The metal terminal 40 is made of a conductive metal material (such as low carbon steel) with an anti-corrosive metal layer (such as Ni layer) applied thereto by plating etc. The metal terminal 40 includes a collar portion 42 located at a predetermined position in the axial direction, a cap attachment portion 41 located rearward of the collar portion 42 and a leg portion 43 located frontward of the collar portion 42. The leg portion 43 is inserted in the axial hole 12 of the insulator 12. The cap attachment portion 41 is exposed outside from the rear end of the insulator 10. A plug cap with a high-voltage cable (not shown) is attached to the cap attachment portion 41 so as to apply a high voltage for generation of a spark discharge.

A resistor 70 is disposed between a front end of the metal terminal 40 (leg portion 43) and a rear end of the center electrode 20 (head portion 23) within the axial hole 12 of the insulator 10 so as to reduce radio noise during generation of the spark discharge. The resistor 70 is made of e.g. a composition containing glass particles as a main component, particles of ceramic other than glass and a conductive material. A space between the resistor 70 and the center electrode 20 is filled with a conductive seal 60. A space between the resistor 70 and the metal terminal 40 is filled with a conductive seal 80. Each of the conductive seals 60 and 80 is made of e.g. a composition containing particles of glass (such as B₂O₃-SiO₂) and particles of metal (such as Cu, Fe).

### A-2. Configuration of Ground Electrode in Vicinity of Electrode Tip

The configuration of the ground electrode 30 in the vicinity of the ground electrode tip 39 will be explained below in detail.

FIG. 2A is a schematic view of a cross section CF of the free end portion of the ground electrode 30 cut along a specific plane parallel with the axis CO. More specifically, the cross section CF of FIG. 2A is taken passing through a gravity center GC of the second discharge surface 395 and extending perpendicular to the second discharge surface 395 and parallel to an axis of the rod-shaped ground electrode body 31. In the present embodiment, a line passing through the gravity center GC of the second discharge surface 395 and extending perpendicular to the second discharge surface 395 is in agreement with the axis CO of the spark plug 100. It can thus be said that the cross section CF of FIG. 2A is taken passing through the axis CO of the spark plug 100 and extending in parallel to the axis of the ground electrode body 31.

FIG. 2B is a plan view of the free end portion of the ground electrode 30 as viewed in the axial direction from the rear side toward the front side. In FIG. 2B, the cross section CF is indicated by a one-dot broken line.

Herein, a direction from the gravity center GC of the second discharge surface 395 toward the free end face 311 along the second discharge surface 395 (i.e. direction toward the left side in FIGS. 2A and 2B) is referred to as "first direction D1". A direction away from the free end face 311 along the second discharge surface 395 (i.e. direction opposite the first direction D1) is referred to as "second direction D2". Among four side surfaces of the ground electrode body 31 intersecting the free end face 311, a side surface facing the first discharge surface 295 is referred to as "side surface 315; and two side surfaces intersecting the side surface 315 and extending in the frontward/rearward direction FD, BD (i.e. direction from the paper surface to the back in FIG. 2B) are referred to as "side surfaces 313 and 314". A direction from the gravity center GC of the second discharge surface 395 toward the side surface 313 (i.e. direction toward the upper side in FIG. 2B) is referred to as "third direction D3". A direction opposite the third direction D3 is referred to as "fourth direction D4".

The ground electrode tip 39 is formed into a rectangular plate shape. In the present embodiment, the ground electrode tip 39 is square in shape when viewed in the axial direction as shown in FIG. 2B. The length W of one side of the square-shaped ground electrode tip 39 (i.e. the dimension of the ground electrode tip 39 in the first direction D1 and in the third direction D3) is set to e.g. 1.5 mm to 2.0 mm. The average thickness of the ground electrode tip 30 (i.e. the dimension of the ground electrode tip 39 in the axial direction) is set to e.g. 0.2 mm to 1.0 mm.

The ground electrode tip 39 is arranged on the side surface 315 of the ground electrode body 31 at a position adjacent to the free end face 311. In the present embodiment, a recess 316 is recessed in the frontward direction FD from the side surface 315 at a position adjacent to the free end face 311. A front side (frontward direction FD side) of the ground electrode tip 39 opposite the second discharge surface 395 is situated in the recess 316. The second discharge surface 395 of the ground electrode tip 39 is located on the rear side (rearward direction BD side) with respect to the side surface 315 of the ground electrode body 31. When viewed in the axial direction, the recess 316 is substantially similar in shape to the ground electrode tip 39 (in the present embodiment, square in shape) but is slightly larger in size than the ground electrode tip 39 as shown in FIG 2B.

As shown in FIG. 2A, a first direction D1 side surface 391 of the ground electrode tip 39 is located on the second direction D2 side with respect to the free end face 311 of the ground electrode body 31.

The ground electrode tip 39 is joined by laser welding to the ground electrode body 31. Accordingly, a weld joint 35 is formed between the ground electrode tip 39 and the ground electrode body 31 by melting and solidification of a part of the ground electrode tip 39 and a part of the ground electrode body 31 during laser welding. The weld joint 35 thus contains both of components of the ground electrode tip 39 and the ground electrode body 31. The weld joint 35 is also called "weld" or "weld bead" by which the ground electrode tip 39 and the ground electrode body 31 are joined together.

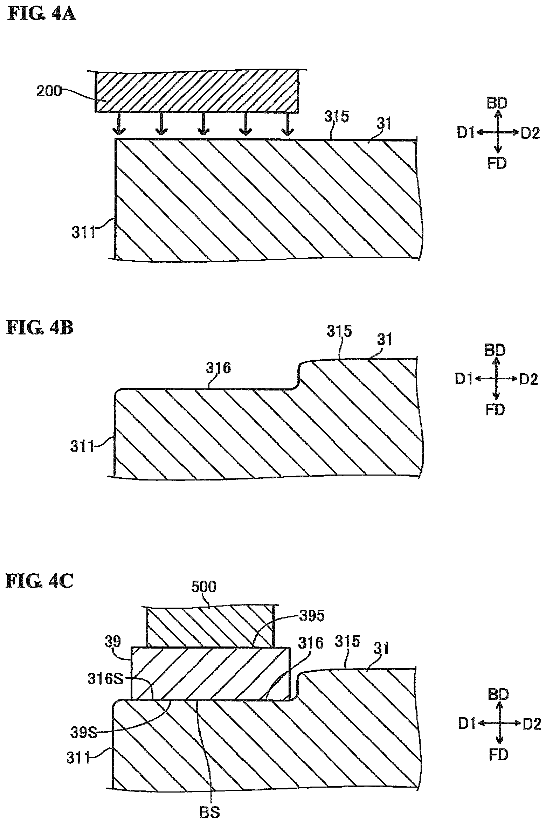

In FIG. 2B, the weld joint 35 is indicated by hatching. As shown in FIG. 2B, the weld joint 35 is substantially similar in shape to the ground electrode tip 39 and the recess 316 (in the present embodiment, square in shape) but is larger in size than the ground electrode tip 39 and slightly larger in size than the recess 316 when viewed in the axial direction. Consequently, first to fourth direction D1 to D4 side edges 351 to 354 of the weld joint 35 are located outward of the corresponding side surfaces 391 to 394 of the ground electrode tip 39. A rear side of the weld joint 35 is in contact with the entire front end surface 39S (also see FIG. 4C) of the ground electrode tip 39 opposite the second discharge surface 395. In other words, the front end surface 39S of the ground electrode tip 39 is entirely welded to the ground electrode body 31.

As shown in FIG. 2A, the first direction D1 side edge 351 of the weld joint 35 is exposed at the free end face 311 of the ground electrode body 31. On the other hand, the second, third, fourth direction D2, D3, D4 side edges 352, 353 and 354 of the weld joint 35 are not exposed at the surface of the ground electrode body 31 (such as side surfaces 313 and 314). This is because, at the time of formation of the weld joint 35 by laser welding, a laser beam is emitted in the second direction D2 from a first direction D1 side of the free end face 311 as will be explained later. The thickness (axial direction length) of the weld joint 35 is larger in the vicinity of the exposed edge 351 than in the other portion and is generally constant in the other portion as shown in FIG. 2A.

### B. Manufacturing Method of Spark Plug

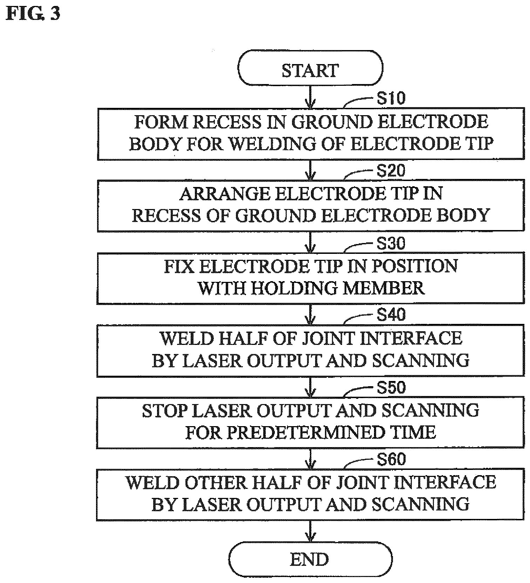

A manufacturing method of the spark plug 100 and, in particular, a production process of the ground electrode 30 will be now explained below. FIG. 3 is a flowchart of the production process of the ground electrode 30. FIGS. 4A to 4C are schematic views of the production process of the ground electrode 30.

First, the ground electrode body 31 is provided in an unbent (straight) rod shape. The ground electrode tip 39 (before welded to the ground electrode body 31) is also provided in a square column shape.

In step S1, the recess 316 into which the ground electrode tip 39 is to be welded is formed in the side surface 315 of the ground electrode body 31. For example, a press member 200 corresponding in shape to the recess 316 is pressed against an area of the side surface 315 adjacent to the free end face 311 of the ground electrode body 31 with the use of a predetermined press machine as shown in FIG. 4A. By this press work, the recess 316 is formed as shown in FIG. 4B.

In step S20, the square column-shaped ground electrode tip 39 is arranged in the recess 316 of the ground electrode body 31 as shown in FIG. 4C. At this time, the front end surface 39S of the ground electrode tip 39 and the bottom surface 316S of the recess 316 are brought into contact with each other.

In step S30, the ground electrode tip 39 is fixed in position relative to the ground electrode body 31 by means of a holding member 500. More specifically, the ground electrode tip 39 is pressed by the holding member 500 in the frontward direction FD from the side of the second discharge surface 395 so that the ground electrode tip 39 is set in position relative to the ground electrode body 31 with the front end surface 39S of the ground electrode tip 39 being held in contact with the bottom surface 316S of the recess 316. Hereinafter, an interface of the front end surface 39S of the ground electrode tip 39 and the bottom surface 316S of the recess 316 is referred to as a "joint interface BS" to be welded between the ground electrode tip 39 and the ground electrode body 31.

In step S40, about half of the joint interface BS on the third direction D3 side is laser welded by outputting and scanning a laser beam. This welding step is called a "first welding step". In the present embodiment, a fiber laser is used as the source of the laser beam in the first welding step. The fiber laser has higher light condensation performance than a YAG laser etc. and thus provides a higher degree of flexibility in the shape design of the weld joint 35. The use of such a fiber laser enables the formation of the weld joint 35 with a relatively small thickness and a relatively large length in the first direction D1 as shown in FIGS. 2A and 2B.

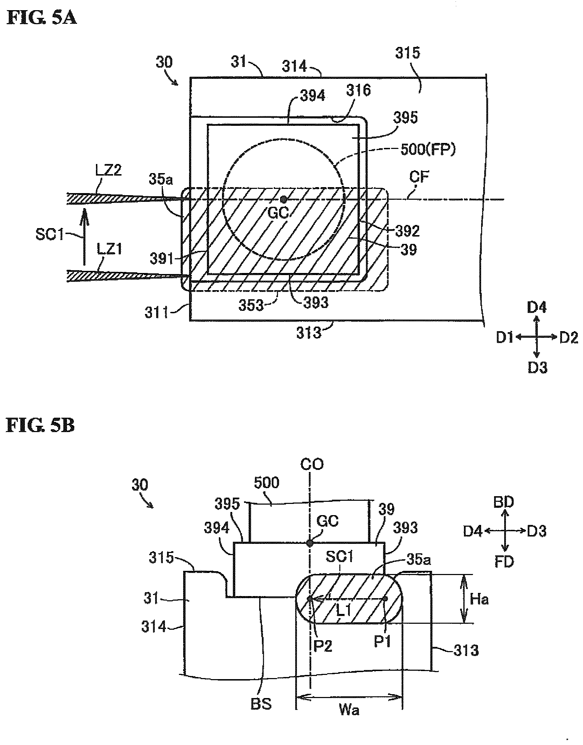

FIG. 5A is a schematic view of the free end portion of the ground electrode 30, as viewed in the frontward direction FD from the rear side, after the first welding step. FIG. 5B is a schematic view of the free end portion of the ground electrode 30, as viewed in the second direction D2 from the first direction D1 side, after the first welding step. In FIG. 5A, the laser beam at the initiation of the first welding step is denoted by LZ1; and the laser beam at the completion of the first welding step is denoted by LZ2. In FIG. 5B, the irradiation position of the laser beam at the initiation of the first welding step is denoted by P1; and the irradiation position of the laser beam at the completion of the first welding step is denoted by P2.

The first welding step is performed by continuous laser irradiation welding, i.e., continuously irradiating the joint interface BS with the laser beam while moving the irradiation position of the laser beam from point P1 to point P2 along the joint interface BS. The movement of the irradiation position of the laser beam from point P1 to point P2 during the first welding step is herein referred to as "first laser scanning SC1". As shown in FIG. 5A, the laser beam is emitted in the second direction D2 from the first direction D1 side of the free end face 311. Further, the first laser scanning SC1 is conducted in the fourth direction D4 as shown in FIGS. 5A and 5B.

The positions of points P1 and P2 in the axial direction are approximately the same as the position of the joint interface BS in the axial direction. The position of point P1 in the third direction D3 is approximately the same as the position of the third direction D3 side surface 393 of the ground electrode tip 39. The position of point P2 in the third direction D3 is approximately the same as the position of the center of the ground electrode tip 39 in the third direction D3. The distance from point P1 to point P2, that is, the scanning length L1 of the first laser scanning SC1 is hence about half of the length W of the ground electrode tip 39 in the third direction D3 (L1 ≈ (W/2)).

In the first welding step, a first weld joint 35a is formed in a first zone of the joint interface BS as shown in FIGS. 5A and 5B. The first weld joint 35a is shaped to include the third direction D3 side half of the final weld joint 35 and is made slightly larger than the half of the final weld joint 35 in the fourth direction D4. Assuming that: Ha is the length of a portion of the first weld joint 35a exposed at the free end face 311 along a direction perpendicular to the scanning direction (in the present embodiment, along the axial direction); and Wa is the length of the portion of the first weld joint 35a exposed at the free end face 311 along the scanning direction, the scanning length L1 is given by (Wa - Ha). In the case where the first welding step is performed by continuous laser irradiation welding, the scanning length L1 is set to e.g. 0.4 mm or more. The scanning length L1 is set to 0.75 to 1 mm in the present embodiment. In the case where the first welding step is performed by pulse welding (i.e. the laser beam is emitted in a pulsed form rather than in a continuous form), the scanning length L1 is set to e.g. less than 0.1 mm.

In FIG. 5A, an area of the holding member 500 being pushed against the ground electrode tip 39 is indicated by a broken line. A region of the ground electrode tip 38 overlapping this area in the axial direction is called a "fixed region FP" at which the ground electrode tip 39 is fixed to the ground electrode body 31. In the first welding step, a third direction D3 side part of the fixed region FP is welded to the ground electrode body 31; whereas a fourth direction D4 side part of the fixed region FP remains unwelded. Thus, the first zone (in which the first weld joint 35a is formed by the first welding step) is set to exclude at least a part of the fixed region FP.

In step S50 after the completion of the first welding step, the output (irradiation) and scanning of the laser beam is stopped for a given stop period. Namely, both of the output of the laser beam and the moving speed of the irradiation position of the laser beam are adjusted to zero during the stop period. The stop period is set to e.g. 0.01 to 5 seconds. During this stop period, solidification of the first weld joint 35a proceeds. Then, the third direction D3 side of the ground electrode tip 39 is joined and fixed to the ground electrode body 31 by the first weld joint 35a.

In step S60, about the remaining half of the joint interface BS is welded by outputting and scanning a laser beam. This welding step is called a "second welding step". In the present embodiment, the fiber laser is also used as the source of the laser beam in the second welding step.

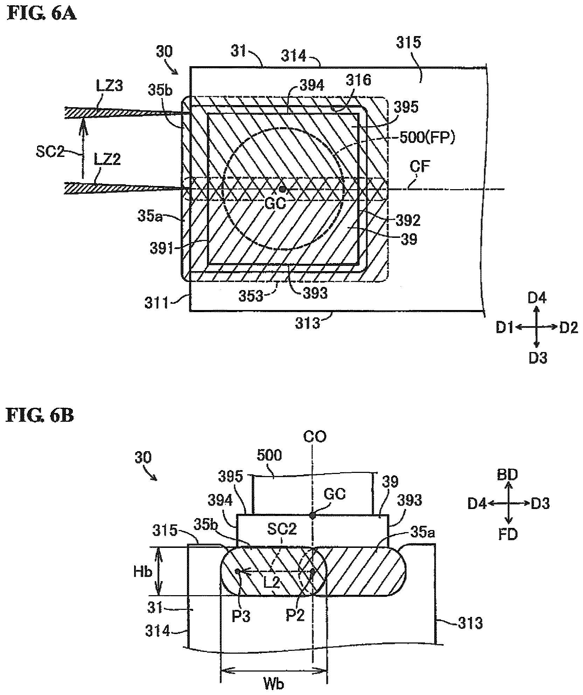

FIG. 6A is a schematic view of the free end portion of the ground electrode 30, as viewed in the frontward direction FD from the rear side, after the second welding step. FIG. 6B is a schematic view of the free end portion of the ground electrode 30, as viewed in the second direction D2 from the first direction D1 side, after the second welding step. In FIG. 6A, the laser beam at the initiation of the second welding step is denoted by LZ2; and the laser beam at the completion of the second welding step is denoted by LZ3. In FIG. 6B, the irradiation position of the laser beam at the initiation of the second welding step is denoted by P2; and the irradiation position of the laser beam at the completion of the second welding step is denoted by P3.

The second welding step is performed by continuous laser irradiation welding, i.e., continuously irradiating the joint interface BS with the laser beam while moving the irradiation position of the laser beam from point P2 to point P3 along the joint interface BS, as in the case of the first welding step. The movement of the irradiation position of the laser beam from point P2 to point P3 during the second welding step is herein referred to as "second laser scanning SC2". As in the case of the first welding step, the laser beam is emitted in the second direction D2 from the first direction D1 side of the free end face 311 as shown in FIG. 6A in the second welding step. Further, the second laser scanning SC2 is also conducted in the fourth direction D4 as shown in FIGS 6A and 6B.

The position of point P3 in the axial direction is approximately the same as the position of the joint interface BS in the axial direction. The position of point P3 in the third direction D3 is approximately the same as the position of the fourth direction D4 side surface 394 of the ground electrode tip 39. The distance from point P2 to point P3, that is, the scanning length L2 of the second laser scanning SC2 is hence substantially equal to the scanning length L1 of the first laser scanning SC1 and is about half of the length W of the ground electrode tip 39 in the third direction D3 (L2 ≈ (W/2)).

In the second welding step, a second weld joint 35b is formed in a second zone of the joint interface BS as shown in FIGS. 6A and 6B. The second zone (in which the second weld joint 35b is formed by the second welding step) is at least partially displaced in position from the first zone (when viewed in the direction of the axis CO) so as to overlap a part of the first zone, or not to completely overlap the first zone, and include an unwelded portion of the joint interface BS left without being welded by the first welded step. In the present embodiment, the second weld joint 35b is shaped to include the fourth direction D4 side half of the final weld joint 35 and is made slightly larger than the half of the final weld joint 35 in the third direction D3. Namely, a third direction D3 side part of the second weld joint 35b overlaps the fourth direction D4 side part of the first weld joint 35a so that the first weld joint 35a and the first weld joint 35b are entirely integrated as one weld joint 35 (see FIG 2). Assuming that: Hb is the length of a portion of the second weld joint 35b exposed at the free end face 311 along a direction perpendicular to the scanning direction (in the present embodiment, along the axial direction); and Wb is the length of the portion of the second weld joint 35b exposed at the free end face 311 along the scanning direction, the scanning length L2 is given by (Wb - Hb). In the case where the second welding step is performed by continuous laser irradiation welding, the scanning length L2 is set to e.g. 0.4 mm or more. In the present embodiment, the scanning length L2 is set to the same as the scanning length L1, that is, 0.75 to 1 mm.

The welding of the ground electrode tip 39 and the ground electrode body 31 is finished upon completion of the second welding step. The welding of the ground electrode tip 39 and the ground electrode body 31 may be performed after the welding of the ground electrode body 31 and the metal shell 50. The welding of the ground electrode body 31 and the metal shell 50 may be performed after the welding of the ground electrode tip 39 and the ground electrode body 31.

Further, the insulator 10, the center electrode 20, the conductive seal 60, the resistor 70, the conductive seal 80 and the metal terminal 40 are assembled together by a known technique, e.g., by inserting the center electrode 20, the material of the conductive seal 60, the material of the resistor 70 and the material of the conductive seal 80 in this order from the rear side into the axial hole 12 of the insulator 10, and then, inserting the metal terminal 40 into the axial hole 12 of the insulator 10 from the rear side while heating the insulator 10.

The above-obtained assembly is fixed into the metal shell 50 by placing the assembly, the talc 9 and the ring members 6 and 7 in the through hole 59 of the metal shell 50, with the plate packing 8 interposed between the step portion 15 of the insulator 10 and the step portion 56 of the metal shell 50, and then, crimping the crimp portion 53 of the metal shell 50 radially inwardly toward the insulator 10.

The ground electrode 30 is then bent so as to define the spark gap between the center electrode tip 29 and the ground electrode tip 39. The spark plug 100 is completed through the above procedure.

In this way, the manufacturing method of the spark plug 100 according to the present embodiment includes the following steps:
a fixing step (S30) of fixing the ground electrode tip 39 to the ground electrode body 31;
a first welding step (S40) of welding the first zone of the joint interface BS, which excludes at least a part of the fixed region FP, by continuous laser irradiation welding along the joint interface BS; and
a second welding step (S60) of welding the second zone of the joint interface BS, which is at least partially displaced in position from the first zone and includes an unwelded portion of the joint interface BS left without being joined by the first welding step, by continuous laser irradiation welding along the joint interface BS.

In the case where the weld joint 35 between the ground electrode tip 39 and the ground electrode body 31 is formed in one welding step, the entire fixed region FP simultaneously becomes a molten state during the welding step. This result in a problem that the ground electrode tip 39 may be inclined by sinking in the molten weld joint 35.

By contrast, the weld joint 35 between the ground electrode tip 39 and the ground electrode body 31 is formed in two separate welding steps (S40, S60) as explained above in the present embodiment. In the first welding step, continuous laser irradiation welding is performed on the first zone of the joint interface BS excluding at least the part of the fixed region FP. In the second welding step, continuous laser irradiation welding is performed on the second zone of the joint interface BS including the unwelded portion of the joint interface BS. The entire fixed region FP is thus avoided from simultaneously becoming a molten state so that the ground electrode tip 39 does not sink in the molten weld joint. It is therefore possible to effectively suppress the above inclination problem of the ground electrode tip 39 during the welding of the ground electrode tip 39 and the ground electrode body 31.

In the present embodiment, the scanning direction of the laser beam in the first welding step is set to the same direction (D4) as the scanning direction of the laser beam in the second welding step as shown in FIGS. 5A, 5B, 6A and 6B. Further, the scanning speed of the laser beam is decreased to a lower level during the period (step S50) between the first welding step and the second welding step than during the first and second welding steps. By such laser irradiation control, it is possible to easily ensure the time for solidification of the first weld joint 35a before the second welding step and thereby more effectively suppress inclination of the ground electrode tip 39 during the welding of the ground electrode tip 39 and the ground electrode body 31. It is also possible to prevent the weld joint 35 from becoming excessively thick and excessively long in the first direction D1 as temperature rises of the ground electrode tip 39 and the ground electrode body 31 can be suppressed by dissipation of heat during the period between the first welding step and the second welding step. In view of the fact that the weld joint 35 is lower in durability than the ground electrode tip 39 and the ground electrode body 31, the durability of the ground electrode 30 deteriorates with increase in the size of the weld joint 35. This durability deterioration problem is effectively suppressed in the present embodiment.

In particular, the scanning of the laser beam is stopped, that is, the scanning speed of the laser beam is set to zero during the period (step S50) between the first welding step and the second welding step in the present embodiment. It is thus possible to ensure the sufficient time for solidification of the first weld joint 35a before the second welding step and more effectively suppress inclination of the ground electrode tip 39 during the welding of the ground electrode tip 39 and the ground electrode body 31.

Furthermore, the output of the laser beam is decreased to a lower level during the period (step S50) between the first welding step and the second welding step than during the first and second welding steps. It is thus possible to allow further solidification of the first weld joint 35a before the second welding step and effectively suppress inclination of the ground electrode tip 39 during the welding of the ground electrode tip 39 and the ground electrode body 31.

In particular, the output of the laser beam is stopped and set to zero during the period (step S50) between the first welding step and the second welding step in the present embodiment. It is thus possible to allow effective solidification of the first welded part 35a.

In other words, the manufacturing method of the spark plug 100 according to the present embodiment includes a step (S50) of refraining from welding the joint interface BS for the given period between the first welding step and the second welding step. As explained above, it is possible by such laser irradiation control to ensure the time for solidification of the first weld joint 35a after the first welding step and effectively suppress inclination of the ground electrode tip 39 during the welding of the ground electrode tip 39 and the ground electrode body 31.

### C. Modification Examples

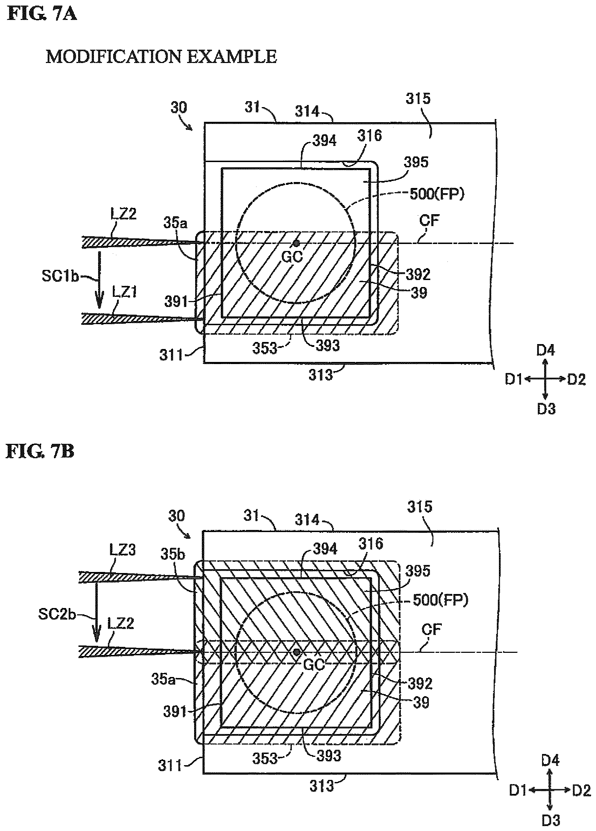

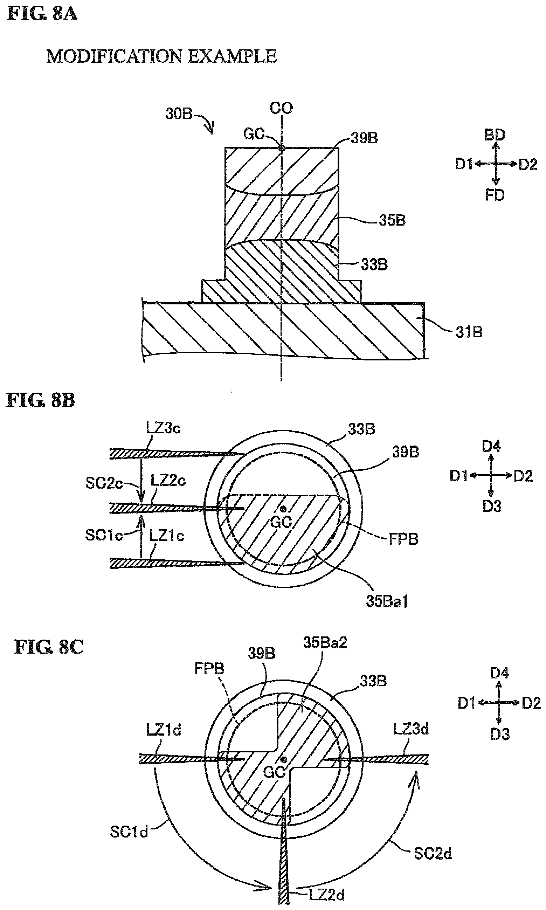

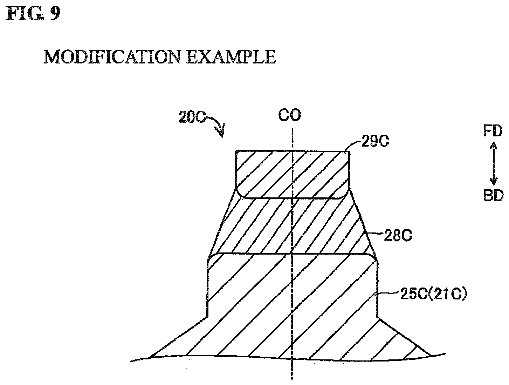

(1) Although the scanning direction of the laser beam in the first welding step (S40) is set to the same direction as the scanning direction of the laser beam in the second welding step (S60) in the above embodiment, the scanning direction of the laser beam in the first welding step (S40) and the scanning direction of the laser beam in the second welding step (S60) may be set different from each other.
   In one modification example, the scanning direction of the laser beam in the first welding step is set to the third direction D3 as shown in FIG 7A, which is opposite to that in the above embodiment; and the scanning direction of the laser beam in the second welding step is set to the fourth direction D4 as in the case of the above embodiment. In this modification example, the first laser scanning SC1b of the first welding step is conducted by moving the laser beam from the center position of the ground electrode tip 39 (LZ2) to the third direction D3 side edge of the ground electrode tip 39 (LZ1) as shown in FIG. 7A. During a period after the first welding step and before the second welding step, the irradiation position of the laser beam is moved in the fourth direction D4 back to the center position of the ground electrode tip 39 (LZ2) while the output of the laser beam is stopped. Then, the second laser scanning SC2 of the second welding step is conducted in the same manner as in the above embodiment. Even in such a case, the first weld joint 35a is solidified until the irradiation position of the laser beam returns to L2. It is thus possible in the modification example of FIG. 7A to effectively suppress inclination of the ground electrode tip 39 as in the case of the above embodiment.
   The temperatures of the ground electrode tip 39 and the ground electrode body 31 increase with the progress of laser welding operation. Depending on the conditions of laser welding operation, there thus arises a problem that, in the case where the scanning direction of the laser beam in the first welding step and the scanning direction of the laser beam in the second welding step are set to the same direction (e.g. fourth direction D4), the axial direction thickness of the weld joint 35 may become excessively larger at the end point (e.g. fourth direction D4 side edge) of the laser welding operation than at the start point (e.g. fourth direction D4 side edge) of the laser welding operation. This can lead to shape variation of the weld joint 35 so that the wear resistance of the ground electrode tip 39 deteriorates due to excessive decrease in the thickness of the ground electrode tip 39 at the fourth direction D4 side edge. In the modification example of FIG. 7A, however, it is possible to suppress variation between the shape of the first weld joint 35a and the shape of the second weld joint 35b and prevent the above tip wear resistance deterioration problem as the scanning direction of the laser beam in the first welding step and the scanning direction of the laser beam in the second welding step are set different from each other.
   In another modification example, the scanning direction of the laser beam in the first welding step is set to the fourth direction D4 as in the case of the above direction; and the scanning direction of the laser beam in the second welding step is set to the third direction D3 as shown in FIG. 7B, which is opposite to that in the above embodiment. In this modification example, the first laser scanning SC1 of the first welding step is conducted in the same manner as in the above embodiment. During a period after the first welding step and before the second welding step, the irradiation position of the laser beam is moved in the fourth direction D4 from the center position of the ground electrode tip 39 (LZ2) to the fourth direction D4 side edge of the ground electrode tip 39 (LZ3). Then, the second laser scanning SC2b of the second welding step is conducted by moving the laser beam from LZ3 to LZ2 as shown in FIG. 7B. Even in such a case, the first weld joint 35a is solidified until the irradiation position of the laser beam is moved the fourth direction D4 side edge (LZ3). It is thus also possible in the modification example of FIG. 7B to effectively suppress inclination of the ground electrode tip 39 as in the case of the above embodiment. It is further possible to suppress variation between the shape of the first weld joint 35a and the shape of the second weld joint 35b and prevent the above tip wear resistance deterioration problem in the modification example of FIG. 7B.
(2) Although the ground electrode tip 39 is directly welded to the ground electrode body 31 in the above embodiment, the ground electrode tip 39 may be welded to the ground electrode body 31 via an intermediate member.
   In one modification example, there is provided a ground electrode 30B by welding a ground electrode tip 39B to an intermediate member 33B and welding the intermediate member 39 to a bent electrode member 31B of the same shape as the ground electrode body 31 of the above embodiment as shown in FIG. 8A. It can be said that the intermediate member 33B and the bent electrode member 31B serve together as a ground electrode body. The ground electrode tip 39B and the intermediate member 33B are joined by laser welding to each other so that a weld joint 35B is formed between the ground electrode tip 39B and the intermediate member 33B, whereas the intermediate member 33B and the bent electrode member 31B are joined by resistance welding to each other. Herein, the ground electrode tip 39B and the intermediate member 33B are cylindrical column-shaped and welded together throughout their entire joint interface.
   In this modification example, the laser welding is performed in two separate steps by emitting a laser beam in the second direction D2 from the first direction D1 side in a state that a region FP of the ground electrode tip 39 is fixed to the intermediate member 33B by a holding member (not shown) as shown in FIG 8B. In FIG. 8B, the fixed region FP is indicated by a broken line. More specifically, the first laser scanning SC1c is conducted in the fourth direction D4 by moving the laser beam from the third direction D3 side edge of the ground electrode tip 39B (LZ1) to the center position of the ground electrode tip 39B (LZ2) in the first welding step. The first weld joint 35Ba1 is consequently formed as indicated by hatching in FIG. 8B. At this time, there remains an unwelded part in the fixed region FPB. Then, the irradiation position of the laser beam is moved in the fourth direction D4 from the center position of the ground electrode tip 39B (LZ2) to the fourth direction D4 side edge of the ground electrode tip 39B (LZ3) while the output of the laser beam is stopped. In the subsequent second welding step, the second laser scanning SC2c is conducted in the third direction D3 by moving the laser beam from the fourth direction D4 side edge of the ground electrode tip 39B (LZ3) to the center position of the ground electrode tip 39B (LZ2). By these first and second welding steps, the entire joint interface of the ground electrode tip 39B and the intermediate member 33B is welded.
   In the modification example of FIG. 8B, the first laser scanning direction SC1c and the second laser scanning SC2c are conducted in different (opposite) directions as explained above. The first laser scanning SC1c and the second laser scanning SC2c may alternatively be conducted in the same direction (e.g. fourth direction D4). Still alternatively, the first laser scanning SC1c may be conducted in the third direction D3; and the second laser scanning SC2c may be conducted in the fourth direction D4.
   As shown in FIG. 8C, the laser beam may be emitted in a direction perpendicular to the outer circumferential surface of the ground electrode tip 39B for welding of the circular column-shaped ground electrode tip 39B to the intermediate member 33B. In this case, laser scanning can be easily conducted by, while maintaining the irradiation position of the laser beam at a fixed position, rotating the ground electrode tip 39B and the intermediate member 33B about the axis CO. In FIG. 8C, the position of the laser beam relative to the ground electrode tip 39B is shown for purposes of illustration. More specifically, the first laser scanning SC1d is conducted on a quarter (90-degree angle) of the entire circumference of the ground electrode tip 39B by moving the laser beam from LZ1d to LZ2d in the first welding step. The first weld joint 35Ba2 is consequently formed as indicated by hatching in FIG. 8C. At this time, there remains an unwelded part in the fixed region FPB. Then, the output and scanning of the laser beam is stopped for a given stop period. In the subsequent second welding step, the second laser scanning SC2d is conducted on another quarter (90-degree angle) of the entire circumference of the ground electrode tip 39B by moving the laser beam from LZ2d to LZ3d. By these first and second welding steps, the entire joint interface of the ground electrode tip 39B and the intermediate member 33B is welded.
   In the modification example of FIG. 8C, the first laser scanning SC1d and the second laser scanning SC2c are conducted in the same direction (i.e. counterclockwise direction). Alternatively, the first laser scanning SC1d and the second laser scanning SC2c may conducted in different directions. For example, it is feasible to conduct the first laser scanning SC1d in a counterclockwise direction and conduct the second laser scanning SC2c in a clockwise direction.
(3) In still another modification example, there is provided a center electrode 20C by laser welding a cylindrical column-shaped center electrode tip 29C to the front end of a cylindrical column-shaped center electrode body 21C (leg portion 25C) and thereby forming a weld joint 28C between the center electrode tip 29C and the center electrode body 21C as shown in FIG. 9. In this modification example, the center electrode tip 29C may be welded to the center electrode tip 21C by the adoption of the above-explained two-step welding technique of FIGS. 8B and 8C.
(4) In the above embodiment, the welding of the ground electrode tip 39 and the ground electrode body 31 is performed by dividing the length W of the ground electrode tip 39 into two laser scanning operations SC1 and SC2. Alternatively, the length W of the ground electrode tip 39 in the third direction D3 may be divided into three or four laser scanning operations.
(5) Although the scanning of the laser beam is stopped during the step S50 in the above embodiment, the scanning of the laser beam may be conducted, without being stopped, at a lower speed during the step S50 than during the first and second welding steps. Even in this case, it is possible to ensure the time for solidification of the first weld joint 35a and suppress inclination of the ground electrode tip 39.
(6) The scanning speed of the laser beam is not necessarily decreased during the period between the first welding step and the second welding step. In the modification example of FIG. 8(C), for example, it is feasible to stop the output of the laser beam and rotate the ground electrode tip 39B and the intermediate member 33B by 360° without decreasing the scanning speed of the laser beam (i.e. the rotation speed of the ground electrode tip 39B and the intermediate member 33B) after conducting the first laser scanning SC1d in the first welding step, and then, conduct the second laser scanning SC2d in the second welding step by restarting the output of the laser beam at the time when the irradiation position of the laser beam returns to the end point (LZ2d) of the first laser scanning SC1d.
(7) Although the output of the laser beam is stopped during the step S50 in the above embodiment, the output of the laser beam may be decreased, without being stopped, to a lower level during the step S50 than during the first and second welding steps. The output of the laser beam is not necessarily set to zero. It suffices to decrease the output of the laser beam to a level corresponding to heat energy less than that dissipated from the ground electrode tip 39 and the ground electrode body 31 such that the welding does not proceed during the period between the first welding step and the second welding step.
(8) In the above embodiment, the holding member 500 is used as the means of fixing the ground electrode tip 39 to the ground electrode body 31 in the fixing step (S30). Alternatively, the ground electrode tip 39 may be fixed to the ground electrode body 31 by any other fixing means such as resistance welding, soldering, adhesive bonding etc. Further, the ground electrode tip 39 may be fixed to the ground electrode body 31 at a part or of the joint interface BS or throughout the entire joint interface BS. Even in this case, it suffices to weld the first zone of the joint interface BS, which excludes at least a part of a region FP of the ground electrode tip 39 fixed by the fixing step, in the first welding step and then weld the second zone of the joint interface BS, which includes unwelded part of the joint interface BS that has not been welded by the first welding step but does not include the whole of the first zone, in the second welding step.
(9) The structure of the spark plug 100 according to the above embodiment is merely one example and can be modified as appropriate. Although the ground electrode tip 39 is formed in a substantially rectangular column shape in the above embodiment, the ground electrode tip 39 may be formed in any other shape such as pentagonal column shape. It is feasible to modify the materials, dimensions and shapes of the metal shell 50, the center electrode 20 and the insulator 10 as appropriate. For example, the metal shell 50 may be formed of low carbon steel with a zinc plating or nickel plating or with no plating. The insulator 10 may be formed of ceramic material other than alumina.

Although the present invention has been described with reference to the above embodiment and modification examples, the above embodiment and modification examples are intended to facilitate understanding of the present invention and are not intended to limit the present invention thereto. Various changes and modifications can be made to the above embodiment and modification examples without departing from the scope of the present invention as defined in the appended claims.

## Claims

1. A method of manufacturing a spark plug (100), the spark plug (100) comprising an electrode (30; 30B; 20C) provided with a noble metal tip (39; 39B; 29C) and an electrode body (31; 31B, 33B; 21C), the manufacturing method comprising:
fixing (S30) the noble metal tip (39; 39B; 29C) to the electrode body (31; 33B; 21C), with a first surface (39S) of the noble metal tip (39; 39B; 29C) being held in contact with a second surface (316S) of the electrode body (31; 33B; 21C) to define a joint interface (BS) of the first surface (39S) and the second surface (316S); and
welding (S40, S60) the noble metal tip (39; 39B; 29C) to the electrode body (31; 33B; 21C), **characterized in that** the welding comprises two separate welding steps (S40, S60) :
a first welding step (S40) of welding a first zone (35a; 35Ba1, 35Ba2) of the joint interface (BS) by continuously irradiating with a laser beam while moving an irradiation position of the laser beam along the joint interface, the first zone excluding at least a part of a region (FP; FPB) of the noble metal tip (39; 39B; 29C) fixed by the fixing (S30); and
after the first welding step (S40), a second welding step (S60) of welding a second zone (35b) of the joint interface (BS) by continuously irradiating with a laser beam while moving an irradiation position of the laser beam along the joint interface, the second zone (35b) being at least partially displaced in position from the first zone (35a; 35Ba1, 35Ba2) and including an unwelded portion of the joint interface (BS) left without being welded by the first welding step (S40).

2. The method according to claim 1, wherein a moving direction of the irradiation position during the first welding step (S40) is the same as a moving direction of the irradiation position during the second welding step (S60); and wherein, during a given period between the first welding step and the second welding step (S60), a moving speed of the irradiation position is decreased to a lower level than during the first and second welding steps (S40, S60).

3. The method according to claim 2, wherein the moving speed of the irradiation position is set to zero during the given period between the first welding step (S40) and the second welding step (S60).

4. The method according to claim 2, wherein an output of the laser beam is decreased to a lower level during the given period between the first welding step (S40) and the second welding step (S60) than during the first and second welding steps (S40, S60).

5. The method according to claim 1, wherein a moving direction of the irradiation position during the first welding step (S40) is the same as a moving direction of the irradiation position during the second welding step (S60); and wherein the manufacturing method comprises a step (S50) of refraining from welding the joint interface (BS) for a given period between the first welding step (S40) and the second welding step (S60).

6. The method according to claim 1, wherein a moving direction of the irradiation position during the first welding step (S40) is different from a moving direction of the irradiation position during the second welding step (S60).

## Patentansprüche

1. Verfahren zur Herstellung einer Zündkerze (100), wobei die Zündkerze (100) eine Elektrode (30; 30B; 20C) aufweist, die mit einer Edelmetallspitze (39; 39B, 29C) und einem Elektrodenkörper (31; 31B; 33B; 21C) versehen ist, wobei das Herstellungsverfahren umfasst:
Befestigen (S30) der Edelmetallspitze (39; 39B; 29C) an dem Elektrodenkörper (31; 33B; 21C), wobei eine erste Oberfläche (39S) der Edelmetallspitze (39; 39B; 29C) in Kontakt mit einer zweiten Oberfläche (316S) des Elektrodenkörpers (31; 33B; 21C) gehalten wird, um eine gemeinsame Grenzfläche (BS) der ersten Oberfläche (39S) und der zweiten Oberfläche (316S) zu definieren; und
Schweißen (S40, S60) der Edelmetallspitze (39; 39B, 29C) an den Elektrodenkörper (31; 33B; 21C),
**dadurch gekennzeichnet, dass** das Schweißen zwei gesonderte Schweißschritte (S40, S60) umfasst:
einen ersten Schweißschritt (S40) zum Schweißen einer ersten Zone (35a; 35Ba1, 35Ba2) der gemeinsamen Grenzfläche (BS) durch kontinuierliches Bestrahlen mit einem Laserstrahl, während eine Bestrahlungsposition des Laserstrahls entlang der gemeinsamen Grenzfläche bewegt wird, wobei die erste Zone zumindest einen Teil eines Bereichs (FP; FPB) der Edelmetallspitze (39; 39B; 29C), der durch das Befestigen (S30) befestigt wird, nicht beinhaltet; und
nach dem ersten Schweißschritt (S40), einen zweiten Schweißschritt (S60) zum Schweißen einer zweiten Zone (35b) der gemeinsamen Grenzfläche (BS) durch kontinuierliches Bestrahlen mit einem Laserstrahl, während eine Bestrahlungsposition des Laserstrahls entlang der gemeinsamen Grenzfläche bewegt wird, wobei die zweite Zone (35b) im Hinblick auf ihre Position zumindest teilweise zur ersten Zone (35a; 35Ba1, 35Ba2) verlagert ist und einen nichtgeschweißten Abschnitt der gemeinsamen Grenzfläche (BS) beinhaltet, der durch den ersten Schweißschritt (S40) nicht-geschweißt verbleibt.

2. Verfahren nach Anspruch 1, wobei eine Bewegungsrichtung der Bestrahlungsposition während des ersten Schweißschritts (S40) gleich einer Bewegungsrichtung der Bestrahlungsposition während des zweiten Schweißschritts (S60) ist; und wobei eine Bewegungsgeschwindigkeit der Bestrahlungsposition während eines vorgegebenen Zeitraums zwischen dem ersten Schweißschritt und dem zweiten Schweißschritt (S60) auf ein niedrigeres Niveau verringert wird als während der ersten und zweiten Schweißschritte (S40, S60).

3. Verfahren nach Anspruch 2, wobei die Bewegungsgeschwindigkeit der Bestrahlungsposition während des vorgegebenen Zeitraums zwischen dem ersten Schweißschritt (S40) und dem zweiten Schweißschritt (S60) auf null eingestellt wird.

4. Verfahren nach Anspruch 2, wobei eine Leistung des Laserstrahls während des vorgegebenen Zeitraums zwischen dem ersten Schweißschritt (S40) und dem zweiten Schweißschritt (S60) auf ein niedrigeres Niveau eingestellt wird als während der ersten und zweiten Schweißschritte (S40, S60).

5. Verfahren nach Anspruch 1, wobei eine Bewegungsrichtung der Bestrahlungsposition während des ersten Schweißschritts (S40) gleich einer Bewegungsrichtung der Bestrahlungsposition während des zweiten Schweißschritts (S60) ist, und wobei das Herstellungsverfahren einen Schritt (S50) zum Unterlassen des Schweißens der gemeinsamen Grenzfläche (BS) für einen vorgegebenen Zeitraum zwischen dem ersten Schweißschritt (S40) und dem zweiten Schweißschritt (S60) umfasst.

6. Verfahren nach Anspruch 1, wobei sich eine Bewegungsrichtung der Bestrahlungsposition während des ersten Schweißschritts (S40) von einer Bewegungsrichtung der Bestrahlungsposition während des zweiten Schweißschritts (S60) unterscheidet.

## Revendications

1. Procédé de fabrication d'une bougie d'allumage (100), la bougie d'allumage (100) comprenant une électrode (30 ; 30B ; 20C) dotée d'une pointe en métal noble (39 ; 39B ; 29C) et d'un corps d'électrode (31 ; 31B, 33B ; 21C), le procédé de fabrication comprenant :
la fixation (S30) de la pointe en métal noble (39 ; 39B ; 29C) au corps d'électrode (31 ; 33B ; 21C), avec une première surface (39S) de la pointe en métal noble (39 ; 39B ; 29C) maintenue en contact avec une seconde surface (316S) du corps d'électrode (31 ; 33B ; 21C) pour définir une interface de jonction (BS) de la première surface (39S) et de la seconde surface (316S) ; et
le soudage (S40, S60) de la pointe en métal noble (39 ; 39B ; 29C) au corps d'électrode (31 ; 33B ; 21C),
**caractérisé en ce que** le soudage comprend deux étapes de soudage distinctes (S40, S60) :
une première étape de soudage (S40) de soudage d'une première zone (35a ; 35Ba1, 35Ba2) de l'interface de jonction (BS) par le rayonnement continu avec un faisceau laser tout en déplaçant une position de rayonnement du faisceau laser le long de l'interface de jonction, la première zone excluant au moins une partie d'une région (FP ; FPB) de la pointe en métal noble (39 ; 39B ; 29C) fixée par la fixation (S30) ; et
après la première étape de soudage (S40), une seconde étape de soudage (S60) de soudage d'une seconde zone (35b) de l'interface de jonction (BS) par rayonnement continu avec un faisceau laser tout en déplaçant une position de rayonnement du faisceau laser le long de l'interface de jonction, la seconde zone (35b) étant au moins partiellement déplacée en position à partir de la première zone (35a ; 35Ba1, 35Ba2) et incluant une position non soudée de l'interface de jonction (BS) laissée sans être soudée par la première étape de soudage (S40).

2. Procédé selon la revendication 1, dans lequel une direction de déplacement de la position de rayonnement pendant la première étape de soudage (S40) est la même qu'une direction de déplacement de la position de rayonnement pendant la seconde étape de soudage (S60) ; et dans lequel, pendant une période donnée entre la première étape de soudage et la seconde étape de soudage (S60), une vitesse de déplacement de la position de rayonnement est réduite à un niveau inférieur à celui pendant les première et seconde étapes de soudage (S40, S60).

3. Procédé selon la revendication 2, dans lequel la vitesse de déplacement de la position de rayonnement est définie à zéro pendant la période donnée entre la première étape de soudage (S40) et la seconde étape de soudage (S60).

4. Procédé selon la revendication 2, dans lequel une sortie du faisceau laser est réduite à un niveau inférieur pendant la période donnée entre la première étape de soudage (S40) et la seconde étape de soudage (S60) à celui pendant les première et seconde étapes de soudage (S40, S60).

5. Procédé selon la revendication 1, dans lequel une direction de déplacement de la position de rayonnement pendant la première étape de soudage (S40) est la même qu'une direction de déplacement de la position de rayonnement pendant la seconde étape de soudage (S60) ; et dans lequel le procédé de fabrication comprend une étape (S50) d'évitement de soudage de l'interface de jonction (BS) pendant une période donnée entre la première étape de soudage (S40) et la seconde étape de soudage (S60).

6. Procédé selon la revendication 1, dans lequel une direction de déplacement de la position de rayonnement pendant la première étape de soudage (S40) est différente d'une direction de déplacement de la position de rayonnement pendant la seconde étape de soudage (S60).
